# EUROPÄISCHE PATENTSCHRIFT

(11) **EP 1 337 444 B1**
(45) Veröffentlichungstag und Bekanntmachung des Hinweises auf die Patenterteilung: **10.08.2005**
(21) Anmeldenummer: 01997442.7
(22) Anmeldetag: 09.11.2001
(51) Int. Cl.: B65D 47/14, B65D 47/08

(54) **VERSCHLUSS AUS BIEGSAMEM KUNSTSTOFF FÜR BEHÄLTER, INSBESONDERE FÜR FLASCHEN**
CLOSURE MADE OF A FLEXIBLE PLASTIC FOR CONTAINERS, ESPECIALLY FOR BOTTLES
SYSTEME DE FERMETURE EN MATIERE PLASTIQUE RESILIENT, NOTAMMENT POUR BOUTEILLES

(30) Priorität: 27.11.2000 CH 23032000
(43) Veröffentlichungstag der Anmeldung: 27.08.2003
(73) Patentinhaber: Alpla Werke Alwin Lehner GmbH & CO. KG, 6971 Hard (AT)
(72) Erfinder: KLOPFER, Manfred, A-6858 Schwarzach (AT)
(74) Vertreter: Schreiber, Wolfgang F.
(86) Internationale Anmeldenummer: PCT/EP2001/012955
(87) Internationale Veröffentlichungsnummer: WO 2002/042174

(56) Entgegenhaltungen:
- FR-A- 2 749 565
- FR-A- 2 764 271
- FR-A- 2 804 089
- GB-A- 1 123 000
- US-A- 3 927 805

## Beschreibung

Die Erfindung betrifft einen Verschluss aus biegsamem Kunststoff für Behälter, insbesondere Flaschen, mit einem Ring, welcher Mittel zur Befestigung am Behälterhals aufweist, einem Deckel, der mittels eines Scharniers mit dem Ring verbunden ist und einen Stopfen aufweist, der am oberen Ende von einer ringförmigen Nut umgeben ist, einem rohrförmigen Ausguss, der mit dem unteren Ende dicht in den Behälterhals einführbar ist und am oberen Ende eine tropfhindernde Ausgusskante aufweist, welche bei verschlossenem Verschluss in die ringförmige Nut des Deckels eingreift. Solche Verschlüsse sind meist auch mit einem Originalitätssicherungsstreifen versehen.

Ein solcher Verschluss wird beispielsweise in der ES-A-9103392 in einstückiger Ausbildung offenbart. Zweistückige Ausbildungen werden in der EP 0 685 406, im spanischen Gebrauchsmuster 87024456, im brasilianischen Gebrauchsmuster 7400915 und in der FR-A-2749565 sowie der entsprechenden BR-A-9605553 beschrieben.

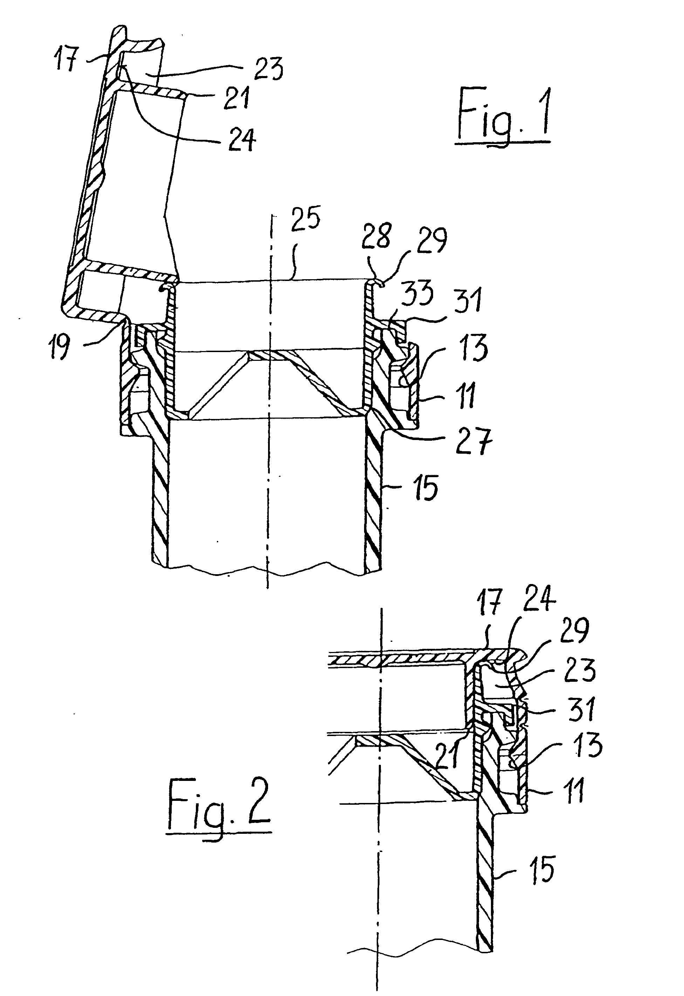

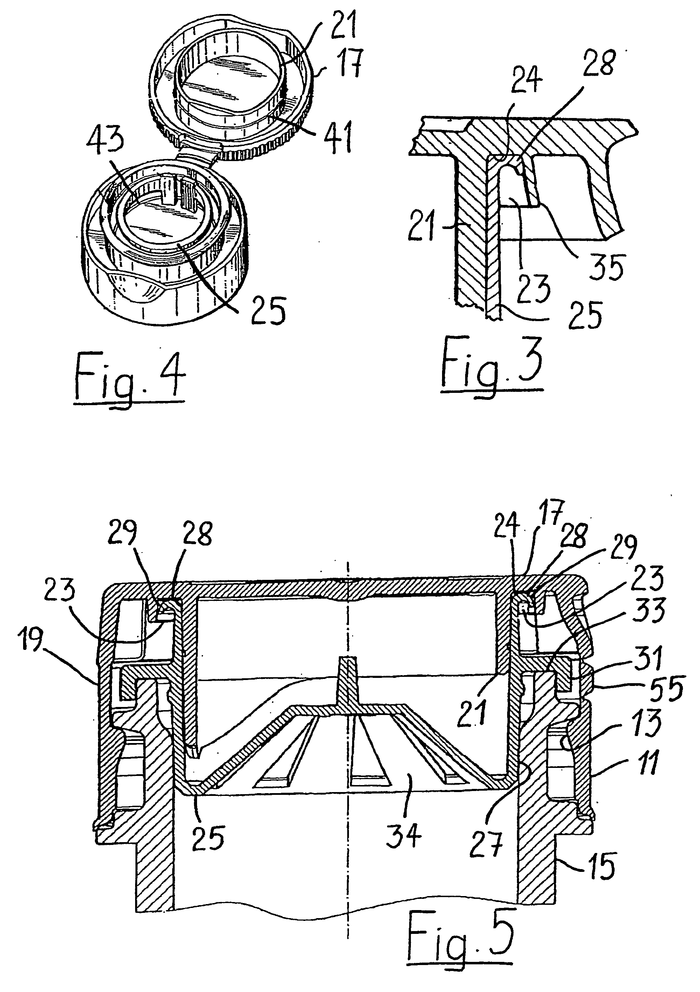

Nachfolgend wird nun anhand der Figuren 1 bis 4 dieser bekannte Stand der Technik näher beschrieben. In den Figuren 1 und 2 ist ein bekannter Verschluss dargestellt, wie er der EP-A-0 685 406, dem spanischen Gebrauchsmuster 9103392 und dem brasilianischen Gebrauchsmuster 7400915 zu entnehmen ist. Dieser Verschluss weist einen Ring 11 auf, welcher Mittel 13 zur Befestigung am Behälterhals 15 besitzt Der Deckel 17 ist mittels eines Scharniers 19 mit dem Ring 11 verbunden und weist einen Stopfen 21, der am oberen Ende von einer ringförmigen Nut 23 umgeben ist. Der rohrförmige Ausguss 25 ist als separates Teil ausgebildet. Der Ausguss 25 ist mit dem unteren Ende 27 dichtend in den Behälterhals 15 einführbar. Am oberen Ende 28 weist er eine tropfhindernde Ausgusskante 29 auf, welche bei verschlossenem Verschluss (Fig. 2) in die ringförmige Nut 23 eingreift.

Die Ausgusskante 29 weist die übliche Form auf, welche dahingehend beschrieben werden kann, dass die Kante nach aussen und nach unten gewölbt ist.

Der Ausguss 25 weist einen Kragen 31 auf, der im Querschnitt zusammen mit der Auslasswandung die Form eines umgekehrten U aufweist.

Bei dem auf dem Flaschenhals 15 aufgesetzten Verschluss sind verschiedene Dichtstellen vorhanden, nämlich zwischen dem unteren Teil 27 des Ausgusses 25 und der Innenwandung des Behälterhalses 15, zwischen dem Kragen 31 und dem oberen Ende 33 des Flaschenhalses 15, zwischen dem Stopfen 21 und der Innenwandung des Ausgusses 25 und zwischen dem Boden 24 der Nut 23 und dem oberen Abschnitt 28 des Ausgusses 25.

In der FR-A-2 749 565 (BR-A-9605553) wird eine Verbesserung der Dichtung zwischen Ausgussende und Deckel vorgeschlagen, wie dies nachfolgend unter Bezugnahme auf Figur 3 näher erläutert wird. Koaxial zum Stopfen 21 ist ein ringförmiger Flansch 35 angeordnet, so dass dazwischen eine ringförmige Nut 23 gebildet wird. Bei geschlossenem Verschluss nimmt diese Nut 23 das obere Ende 28 des Ausgusses 25 passend auf, wobei das Ausgussende 28 am Boden 24 der Nut 23 zur Anlage kommt oder kommen sollte. Nachteilig ist dabei, dass wenn nach Gebrauch des Behälters der Verschluss geschlossen wird, Luft in der ringförmigen Nut 23 gefangen bleibt, zusammengepresst wird und die Tendenz besitzt, den Verschluss wieder zu öffnen. Entsprechendes gilt auch für nach dem Ausgiessen von Flüssigkeit am Ausguss 25 anhaftende Flüssigkeitsreste, z.B. Oel. Um der Tendenz zu ungewolltem Oeffnen entgegenzuwirken, wird in der zitierten Druckschrift vorgeschlagen, eine Schnappvorrichtung vorzusehen, wie sie beispielsweise durch die FR-A-2706425 bekannt geworden ist. Diese bekannte Vorrichtung ist in Figur 4 dargestellt. Der Arretierung des Deckels 17 dient der ringförmig um den Stopfen 21 verlaufende Wulst 41, der beim Schliessen des Deckels 17 über den ringförmigen Wulst 43 im Inneren des Ausgusses 25 geschoben wird. Nachteilig ist dabei, dass zum Verschliessen ein relativ hoher Kraftaufwand notwendig ist. Nachteilig ist ferner, dass solche Wülste den Formenbau verteuern und das Entformen der Verschlüsse erschweren, denn die Wülste müssen aus den Vertiefungen in der Form gezogen werden.

Es ist daher Aufgabe der vorliegenden Erfindung, einen Verschluss der eingangs erwähnten Gattung zu verbessern. Insbesondere soll ein Verschluss geschaffen werden, der einfach im Aufbau ist und dennoch ein sicheres Verschliessen gewährleistet. Erfindungsgemäss wird dies bei einem Verschluss der eingangs erwähnten Gattung dadurch erreicht, dass die ringförmige Nut mindestens einen Auslass aufweist. Durch diesen Auslass kann beim Schliessen des Verschlusses die in der ringförmigen Nut befindliche Luft ausströmen, so dass in der Nut kein Ueberdruck entstehen kann, welcher die Tendenz besitzt, den Deckel wieder abzuheben.

Zweckmässigerweise ist die ringförmige Nut durch den Raum zwischen dem Stopfen und einem koaxial dazu angeordneten ringförmigen Flansch gebildet. Dies ermöglicht es, den jeweiligen Auslass durch einen Schlitz im ringförmigen Flansch zu bilden.

Vorteilhaft ist der Durchmesser des Ausgusses über die Ausgusskante gemessen etwas grösser als der Aussendurchmesser der ringförmigen Nut. Beim Einschieben des Ausgusses in den ringförmigen Verschlussteil gerät daher die Ausgusskante in Kontakt mit dem ringförmigen Flansch und wird nach unten gebogen. Dadurch erhält sie eine optimale Form, welche im Gebrauch des Behälters tropfhindemd wirkt.

Zweckmässigerweise sind am Boden der Nut in Abstand voneinander Auflageflächen für den Ausguss vorgesehen. Weil diese Auflagefläche mit dem Ausguss in Kontakt stehen, werden beim Aufsetzen des Verschlusses auf dem Behälter die auf den Deckel wirkenden Kräfte auf den Ausguss übertragen. Da der Ausguss nur an diesen Auflageflächen anliegt, besteht zwischen dem oberen Ende des Verschlusses und dem Boden der Nut ein Zwischenraum, in welchem gegebenenfalls am Ausguss haftende kleine Flüssigkeitsreste Platz finden, so dass sie nicht aus dem Auslass austreten.

Am Ausguss kann ein Kragen vorgesehen sein, der beim Aufsetzen des Verschlusses auf den Behälter auf dem Ende des Behälterhalses zur Auflage kommt. Der Deckel weist vorteilhaft innere Ausstülpungen auf, welche bei geschlossenem Verschluss auf dem Kragen aufliegen. Diese Ausstülpungen dienen ebenfalls der Kraftübertragung vom Deckel auf den Ausguss, wenn der Verschluss auf den Behälter aufgesetzt wird.

Der Verschluss kann einstückig oder zweistückig ausgeführt werden. Bei der zweistückigen Ausführung wird der rohrförmige Ausguss als separates Teil in den Ring eingesetzt.

Wie beim einleitend beschriebenen Stand der Technik kann der Verschluss einen abreissbaren Originalitätssicherungsstreifen aufweisen.

Ein Ausführungsbeispiel der Erfindung wird nun unter Bezugnahme auf die Zeichnung beschrieben. Zum besseren Verständnis der Erfindung wird aber vorerst in den Figuren 1 bis 4 bekannter Stand der Technik dargestellt. Es zeigen in nicht massstabsgetreuer, schematischer Darstellung:
- Fig. 1: einen bekannten zweiteiligen Verschluss in geöffnetem Zustand;
- Fig. 2: den Verschluss von Fig. 1 in geschlossenem Zustand;
- Fig. 3: eine bekannte Weiterentwicklung des Verschlusses gemäss Fig. 1 und 2;
- Fig. 4: einen weiteren bekannten Verschluss mit einer Schnappvorrichtung;
- Fig. 5: einen Schnitt durch ein Ausführungsbeispiel des erfindungsgemässen Verschlusses nach dem Aufsetzen auf einen Behälterhals;
- Fig. 6: eine Ansicht von unten gesehen des Verschlusses gemäss Fig. 5, jedoch ohne eingesetzten Ausguss;
- Fig. 7: einen nicht-massstäblichen Schnitt entlang der Linie A-A in Fig. 6;
- Fig. 8: Einen nicht-massstäblichen Schnitt entlang der Linie B-B in Fig. 6;
- Fig. 9: Einen nicht-massstäblichen Schnitt entlang der Linie C-C in Fig. 6; und
- Fig. 10: das Einsetzen des Ausgusses in das andere Verschlussteil.

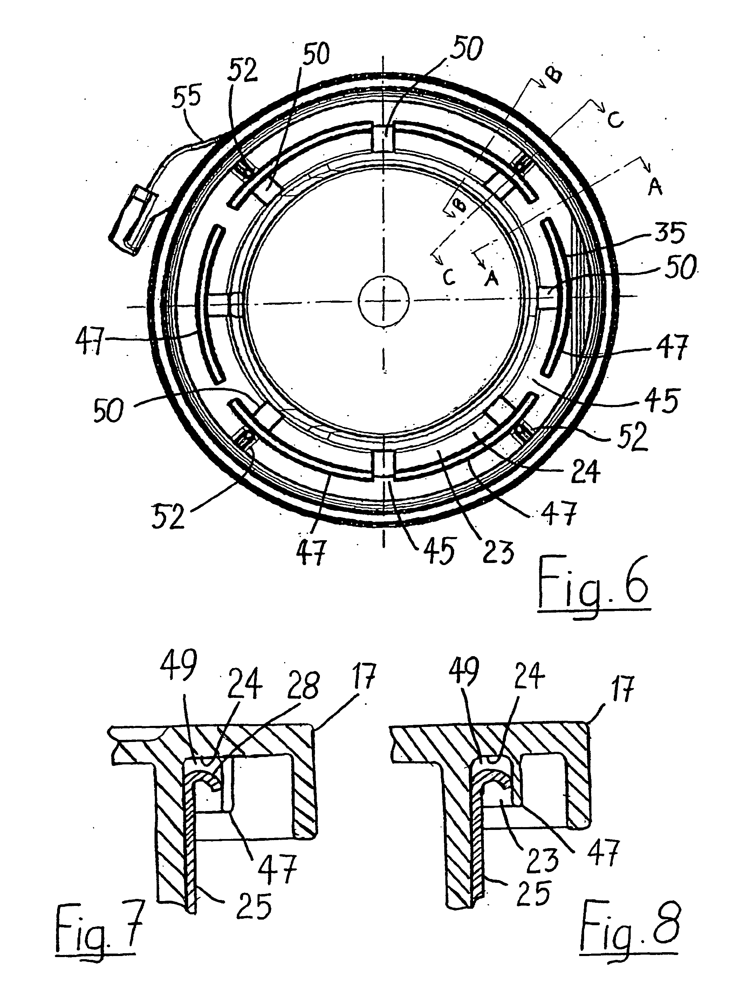

Der Verschluss gemäss dem Ausführungsbeispiel der Figuren 5 bis 9 besitzt einen ähnlichen Aufbau wie der bekannte Verschluss, welcher einleitend unter Bezugnahme auf die Figuren 1 bis 3 beschrieben wurde. Das Ausführungsbeispiel zeigt eine zweistückige Ausführung. Es wäre aber möglich, den Verschluss auch einstückig zu gestalten. Der Verschluss weist einen Ring 11 auf, welcher Mittel 13 zur Befestigung am Behälterhals 15 besitzt. Der Deckel 17 ist mittels eines Scharniers 19 mit dem Ring 11 verbunden und weist einen Stopfen 21 auf. Der rohrförmige Ausguss 25 ist als separates Teil in den Ring 11 eingeschoben und bildet nach dem Einschieben mit diesem eine Einheit Zum Verschliessen der Behälter gelangen solche Einheiten zum Einsatz. Dabei greifen die Befestigungsmittel 13 am Behälter als 15 an und der Ausguss 25 liegt mit seinem unteren Ende 27 dichtend an der Innenwandung des Behälterhalses 15 an.

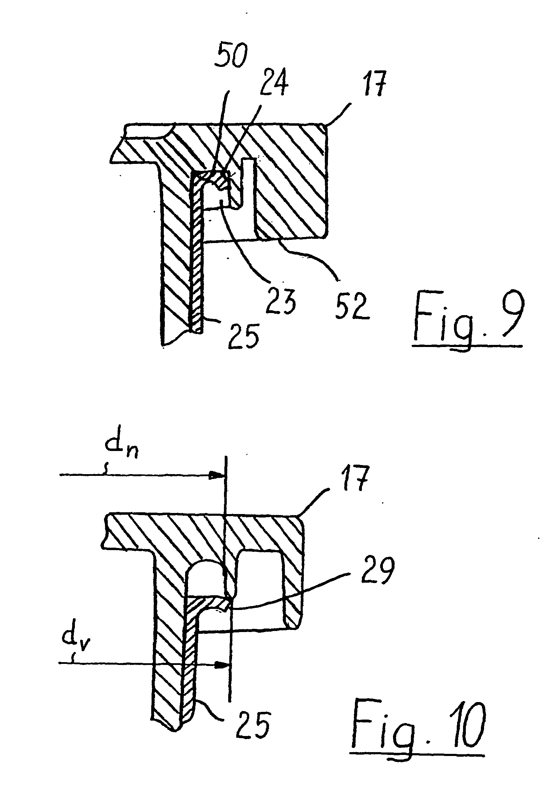

Der Ausguss 25 weist am oberen Ende 28 eine tropfhindernde Ausgusskante 29 auf, welche die übliche Form besitzt, also nach aussen und nach unten gewölbt. Bei der Herstellung des Ausgusses 25 kann der Durchmesser dᵥ über die Ausgusskanten 29 gemessen etwas grösser bemessen werden als der Aussendurchmesser dₙ der Nut 23. Beim Zusammensetzen des Verschlusses stösst deshalb die Ausgusskante 29 am Flansch 35 an und wird so in die optimale tropfhindernde Form gebracht (Fig. 10). Der Ausguss 25 besitzt einen Kragen 31, der zusammen mit der Ausgusswandung die Form eines umgekehrten U's aufweist. Nach dem Aufsetzen des Verschlusses liegt der Kragen 31 auf dem oberen Ende 33 des Behälterhalses auf. Im Inneren des Ausgusses 25 ist in bekannter Art eine Art Gitter 34 ausgebildet, das der Flussregelung dient

Am Deckel 17 ist koaxial zum Stopfen ein ringförmiger Flansch 35 angeordnet, so dass zwischen Stopfen 21 und Flansch 35 eine ringförmige Nut 23 gebildet wird.

Im Gegensatz zum eingangs beschriebenen Stand der Technik ist aber mindestens ein Auslass oder Schlitz 45 vorhanden. Wie Figur 6 zeigt, kann dieser Auslass z.B. als Durchbruch im ringförmigen Flansch 35 ausgebildet sein. Beim gezeigten Ausführungsbeispiel sind sechs solche Auslässe 45 oder Durchbrüche vorgesehen, so dass der ringförmige Flansch 35 in sechs Segmente 47 aufgeteilt ist.

Wie Figur 6 in Verbindung mit Figur 9 zeigt, befinden sich am Boden 24 der Nut 23 in Abständen voneinander angeordnete Auflageflächen 50 für das obere Ende 28 des Ausgusses 25. Wie die Figuren 7 und 8 zeigen, befinden sich somit zwischen dem oberen Ende 28 des Ausgusses 25 und dem Boden 24 Hohlräume 49, in welchem gegebenenfalls an der Ausgusskante 29 haftende Restflüssigkeit Aufnahme finden kann. Im Gegensatz zum beschriebenen Stand der Technik findet keine Dichtung zwischen dem Ende 28 und dem Boden 24 statt. Es ist aber ersichtlich, dass beim Schliessen des Deckels 17 keine Luft in der Nut 23 gefangen bleibt, sondern durch die Auslässe 45 zwischen den Segmenten 47 austreten kann.

Am Deckel 17 sind über den Umfang verteilt Ausstülpungen 52 ausgebildet, welche bei geschlossenem Verschluss auf dem Kragen 31 aufliegen. Sie haben beim Aufsetzen des Verschlusses auf den Behälterhals 15 die Aufgabe, Kräfte vom Deckel auf den Kragen 31 zu übertragen.

Das in den Figuren 5 und 6 gezeigte Ausführungsbeispiel zeigt auch einen wegreissbaren Originalitätssicherungsstreifen 55.

### Zusammenfassend wird folgendes festgehalten:

Der Verschluss besteht aus dem ringförmigen Teil 11, an welchem mittels des Scharniers 19 ein Deckel 17 angelenkt ist, und dem in das ringförmige Teil 11 eingeschobenen Ausguss 25. Beim Einschieben des Ausgusses 25 stösst die Ausgusskante 29 an den Segmenten 47 an und wird so in die optimale tropfhindernde Form gebracht Beim Schliessen des Deckels 17 kann die Luft in der Nut durch die Auslässe 45 entweichen, so dass sie das Schliessen nicht behindert oder die Tendenz besitzt, den Verschluss zu öffnen. Ferner kommt beim Schliessen das obere Ende 28 des Ausgusses 25 in Kontakt mit den Auflageflächen 50, die in Abstand voneinander in der Nut 23 angeordnet sind, wobei Flüssigkeitsreste in den Hohlräumen 49 Aufnahme finden können.

## Patentansprüche

1. Verschluss aus biegsamem Kunststoff für Behälter, insbesondere für Flaschen, mit einem Ring (11), welcher Mittel (13) zur Befestigung am Behälterhals (15) aufweist, einem Deckel (17), der mittels eines Scharniers (19) mit dem Ring (11) verbunden ist und einen Stopfen (21) aufweist, der am oberen Ende von einer ringförmigen Nut (23) umgeben ist, einem rohrförmigen Ausguss (25), der mit dem unteren Ende (27) dichtend in den Behälterhals (15) einführbar ist und am oberen Ende (28) eine tropfhindernde Ausgusskante (29) aufweist, welche bei verschlossenem Verschluss in die ringförmige Nut (23) des Deckels (17) eingreift, **dadurch gekennzeichnet, dass** die ringförmige Nut (23) mindestens einen Auslass (45) aufweist.

2. Verschluss nach Anspruch 1, **dadurch gekennzeichnet, dass** die ringförmige Nut durch den Raum (23) zwischen den Stopfen (21) und einem koaxial dazu angeordneten ringförmigen Flansch (35) gebildet ist.

3. Verschluss nach Anspruch 2, **dadurch gekennzeichnet, dass** der jeweilige Auslass (45) durch einen Schlitz im ringförmigen Flansch (35) gebildet ist.

4. Verschluss nach einem der Ansprüche 1 bis 3, **dadurch gekennzeichnet, dass** der Durchmesser (dᵥ) des Ausgusses (25) über die Ausgusskanten (29) gemessen etwas grösser ist als der Aussendurchmesser (dₙ) der ringförmigen Nut (23).

5. Verschluss nach einem der Ansprüche 1 bis 4, **dadurch gekennzeichnet, dass** am Boden der ringförmigen Nut (23) in Abstand voneinander Auflageflächen (50) für das Ausgussende (28) vorgesehen sind.

6. Verschluss nach einem der Ansprüche 1 bis 5, **dadurch gekennzeichnet, dass** am Ausguss ein Kragen (31) vorgesehen ist, der beim Aufsetzen des Verschlusses auf den Behälterhals (15) auf dem Ende (33) des Behälterhalses (15) zur Auflage kommt

7. Verschluss nach Anspruch 6, **dadurch gekennzeichnet, dass** der Deckel (17) immer Ausstülpungen (52) aufweist, welche bei geschlossenem Verschluss auf dem Kragen (31) aufliegen.

8. Verschluss nach einem der Ansprüche 1 bis 7, **dadurch gekennzeichnet, dass** er einstückig ist.

9. Verschluss nach einem der Ansprüche 1 bis 8, **dadurch gekennzeichnet, dass** der Ausguss (25) als separates Teil in den Ring (11) eingesetzt ist

10. Verschluss nach einem der Ansprüche 1 bis 9, **dadurch gekennzeichnet, dass** er einen abreissbaren Originautätssicherungsstreifen (55) aufweist.

## Claims

1. A closure made from a flexible plastics material for containers, particularly for bottles, having a ring (11) which has means (13) for mounting it on the bottle neck (15), a lid (17), which is connected to the ring (11) by means of a hinge (19), and a stopper (21), which is surrounded at the upper end by an annular groove (23), a tubular spout (25), which can be inserted by its lower end (27) into the container neck (15) in sealing manner and has, at the upper end (28), a drip-preventing spout edge (29) which engages in the annular groove (23) of the lid (17) when the closure is closed, **characterised in that** the annular groove (23) has at least one outlet (45).

2. A closure according to Claim 1, **characterised in that** the annular groove is formed by the space (23) between the stopper (21) and an annular flange (35) arranged coaxially thereto.

3. A closure according to Claim 2, **characterised in that** the respective outlet (45) is formed by a slit in the annular flange (35).

4. A closure according to one of Claims 1 to 3, **characterised in that**, measured across the spout edges (29), the diameter (dᵥ) of the spout (25) is somewhat greater than the outer diameter (dₙ) of the annular groove (23).

5. A closure according to one of Claims 1 to 4, **characterised in that** mutually spaced bearing surfaces (50) for the spout end (28) are provided on the base of the annular groove (23).

6. A closure according to one of Claims 1 to 5, **characterised in that** a collar (31) is provided on the spout, which comes to lie on the end (33) of the container neck (15) when the closure is placed on the bottle neck (15).

7. A closure according to Claim 6, **characterised in that** the lid (17) always has protuberances (52) which lie on the collar (31) when the closure is closed.

8. A closure according to one of Claims 1 to 7, **characterised in that** it is in one piece.

9. A closure according to one of Claims 1 to 8, **characterised in that** the spout (25) is inserted in the ring (11) as a separate part.

10. A closure according to one of Claims 1 to 9, **characterised in that** it has a tear-off tamper-evident strip (55).

## Revendications

1. Fermeture en matière plastique flexible pour des récipients, en particulier pour des bouteilles, avec une bague (11), présentant des moyens (13) permettant la fixation sur le goulot du récipient (15), un couvercle (17) qui est relié à la bague (11) à l'aide d'une charnière (19) et un bouchon (21), qui est entouré, au niveau de son extrémité supérieure, par une rainure annulaire (23), un bec (25) tubulaire, qui peut être introduit de manière étanche dans le goulot du récipient (15) par son extrémité inférieure (27) et présente, au niveau de son extrémité supérieure (28), un rebord de bec (29) empêchant tout écoulement, qui, quand la fermeture est apposée, s'engrène dans la rainure annulaire (23) du couvercle (17), **caractérisée en ce que** la rainure annulaire (23) présente au moins une évacuation (45).

2. Fermeture selon la revendication 1, **caractérisée en ce que** la rainure annulaire est formée par l'espace (23) entre le bouchon (21) et une bride annulaire (35) disposée de manière coaxiale par rapport à celui-ci.

3. Fermeture selon la revendication 2, **caractérisée en ce que** l'évacuation (45) respective est formée par une fente dans la bride annulaire (35).

4. Fermeture selon l'une quelconque des revendications 1 à 3, **caractérisée en ce que** le diamètre (dᵥ) du bec (25), mesuré entre les rebords du bec (29), est supérieur au diamètre extérieur (dₙ) de la rainure annulaire (23).

5. Fermeture selon l'une quelconque des revendications 1 à 4, **caractérisée en ce que**, au fond de la rainure annulaire (23), sont prévues, à une certaine distance l'une de l'autre, des surfaces d'appui (50) pour l'extrémité du bec (28).

6. Fermeture selon l'une quelconque des revendications 1 à 5, **caractérisée en ce que**, au niveau du bec, il est prévu un collet (31) qui, quand applique la fermeture sur le goulot du récipient (15), se met en place sur l'extrémité (33) du goulot du récipient (15).

7. Fermeture selon la revendication 6, **caractérisée en ce que** le couvercle (17) présente toujours des protubérances (52), qui reposent sur le collet (31) quand la fermeture est mise en place.

8. Fermeture selon l'une quelconque des revendications 1 à 7, **caractérisée en ce qu'**elle est réalisée d'un seul tenant.

9. Fermeture selon l'une quelconque des revendications 1 à 8, **caractérisée en ce que** le bec (25) est inséré dans la bague (11) en tant que pièce séparée.

10. Fermeture selon l'une quelconque des revendications 1 à 9, **caractérisée en ce qu'**elle présente des bandes de sécurité originale (55) qui peuvent se déchirer.
